# EUROPÄISCHE PATENTSCHRIFT

(11) **EP 2 639 156 B1**
(45) Veröffentlichungstag und Bekanntmachung des Hinweises auf die Patenterteilung: **01.04.2020**
(21) Anmeldenummer: 13156201.9
(22) Anmeldetag: 21.02.2013
(51) Int. Cl.: B64D 11/06, B60N 2/02, B60N 2/00

(54) **Sitzsteuerungsvorrichtung, insbesondere für einen Fluggastsitz**
Seat control device, in particular for an aircraft passenger seat
Dispositif de commande de siège, en particulier de siège de passager aérien

(30) Priorität: 13.03.2012 DE 102012004840
(43) Veröffentlichungstag der Anmeldung: 18.09.2013
(73) Patentinhaber: Recaro Aircraft Seating GmbH & Co. KG, 74523 Schwäbisch Hall (DE)
(72) Erfinder: Philipp, Adrian, 74538 Rosengarten Westheim (DE); Laubenberger, Jörg, 71540 Murrhardt (DE); Mehmel, Jürgen, 74523 Schwäbisch Hall (DE); Gerngroß, Michael, 74545 Michelfeld (DE); Sabbah, Olaf, 80634 München (DE); Lohrmann, Jochen, 71332 Waiblingen (DE)
(74) Vertreter: Daub, Thomas

(56) Entgegenhaltungen:
- EP-A1- 1 582 458
- DE-A1-102007 006 866
- DE-A1-102007 052 598
- US-A1- 2002 125 050
- US-A1- 2008 215 209

## Beschreibung

### Stand der Technik

Die Erfindung geht aus von einer Sitzsteuerungsvorrichtung nach dem Oberbegriff des Patentanspruchs 1.

Es ist bereits eine Sitzsteuerungsvorrichtung für einen Fluggastsitz, mit einer Sitzsteuereinheit, die zur Ansteuerung einer Komforteinheit vorgesehen ist, bekannt. Üblicherweise sind derartige Sitzsteuerungsvorrichtungen zur Verstellung von einzelnen Sitzkomponenten oder zur Veränderung einer Sitzbeleuchtung vorgesehen. Die DE102007052598 zeigt eine Sitzsteuerungsvorrichtung für einen Fluggastsitz, mit einer Sitzsteuereinheit, die zur Ansteuerung einer Komforteinheit vorgesehen ist, wobei die Sitzsteuereinheit eine Recheneinheit aufweist, die zumindest einen durch eine Erfassungseinheit definierten Benutzerprofildatensatz umfasst, mit einer Erfassungseinheit, die dazu vorgesehen ist, den Benutzerprofildatensatz zumindest in einem Erfassungsmodus zumindest teilweise zu definieren, wobei die Erfassungseinheit zumindest ein Sensorelement zur Erfassung von zumindest einer physikalischen Größe aufweist.

Es liegt der Erfindung insbesondere die Aufgabe zugrunde, einen Komfort für einen Passagier individuell zu erhöhen.

Diese Aufgabe wird durch eine Sitzsteuerungsvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzsteuerungsvorrichtung, insbesondere für einen Fluggastsitz, mit einer Sitzsteuereinheit, die zur Ansteuerung einer Komforteinheit vorgesehen ist.

Es wird vorgeschlagen, dass die Sitzsteuereinheit eine Recheneinheit aufweist, die zumindest einen durch eine Erfassungseinheit definierten Benutzerprofildatensatz umfasst, wodurch vorteilhaft eine besonders individuelle und bequeme Komforteinstellung der Komforteinheit erreicht werden kann. Unter einer "Sitzsteuereinheit" soll in diesem Zusammenhang insbesondere eine Einheit verstanden werden, die eine Recheneinheit und/oder eine Positionsdatenspeichereinheit aufweist und dazu vorgesehen ist, Sitzkomponenten, wie beispielsweise Sitzaktuatoren und/oder Beleuchtungsmittel, elektrisch, pneumatisch und/oder hydraulisch anzusteuern. Unter einer "Komforteinheit" soll in diesem Zusammenhang eine Einheit verstanden werden, die dazu vorgesehen ist, eine Komforteinstellung für einen Passagier zu verändern. Eine Anwendung der Sitzsteuerungsvorrichtung soll in diesem Zusammenhang nicht auf einen Passagier beschränkt sein. Es ist insbesondere auch denkbar, dass die Sitzsteuerungsvorrichtung für Besatzungsmitglieder oder sonstige Benutzer eines Sitzes, welcher mit der Sitzsteuerungsvorrichtung ausgestattet ist, ausgelegt ist. Im Folgenden wird der Einfachheit halber eine Verwendung der Sitzsteuerungsvorrichtung durch einen Passagier beschrieben. Bevorzugt weist die Komforteinheit zumindest einen Sitzaktuator und/oder ein Beleuchtungsmittel auf. Unter "individuell" soll in diesem Zusammenhang insbesondere speziell an benutzerspezifische Körpermaße und/oder an ein benutzerspezifisches Körpergewicht angepasst verstanden werden. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Unter einer "Erfassungseinheit" soll in diesem Zusammenhang insbesondere eine Einheit verstanden werden, die zumindest ein Sensorelement und/oder eine Eingabeeinheit zur Erfassung einer physikalischen Größe aufweist. Unter einem "Sensorelement" soll in diesem Zusammenhang insbesondere ein Element verstanden werden, das zur Erfassung einer Kraft, eines elektrischen Stromflusses, einer elektrischen Spannung, einer Position, einer Helligkeit und/oder eines Drucks vorgesehen ist. Bevorzugt wandelt die Erfassungseinheit eine erfasste physikalische Größe in eine elektrische Sensorinformation um, die an die Recheneinheit geleitet wird. Unter einer "Eingabeeinheit" soll in diesem Zusammenhang insbesondere eine Einheit verstanden werden, die dazu vorgesehen ist, manuelle Benutzereingaben zu erfassen und an die Recheneinheit zu leiten. Bevorzugt ist die Eingabeeinheit von einem Mobiltelefon gebildet. Unter einem "Benutzerprofildatensatz" soll in diesem Zusammenhang insbesondere ein Datensatz verstanden werden, der spezifische Informationen über zumindest ein Benutzerprofil umfasst. Unter einem "Benutzerprofil" soll in diesem Zusammenhang insbesondere eine Profilinformation eines Benutzers verstanden werden, das zumindest eine Körpermaßinformation und/oder eine Körpergewichtsinformation umfasst. Unter "vorgesehen" soll insbesondere speziell programmiert, ausgelegt und/oder ausgestattet verstanden werden.

In einer weiteren Ausgestaltung der Erfindung wird vorgeschlagen, dass die Sitzsteuerungsvorrichtung eine Erfassungseinheit aufweist, die dazu vorgesehen ist, den Benutzerprofildatensatz zumindest in einem Erfassungsmodus zumindest teilweise zu definieren, wodurch vorteilhaft bei jeder Benutzung der Sitzsteuerungsvorrichtung eine weitere Anpassung beziehungsweise eine Verbesserung am Benutzerprofildatensatz vorgenommen werden kann. Unter einem "Erfassungsmodus" soll in diesem Zusammenhang insbesondere ein Betriebszustand verstanden werden, in dem die Recheneinheit Sensorinformationen zur Definition und/oder Anpassung des Benutzerprofildatensatzes verwendet. Bevorzugt befindet sich die Sitzsteuerungsvorrichtung unmittelbar vor oder während einer Benutzung der Sitzsteuerungsvorrichtung durch einen Passagier im Erfassungsmodus. Unter "definieren" soll in diesem Zusammenhang insbesondere neu erstellen, erweitern und/oder ändern verstanden werden.

Ferner wird vorgeschlagen, dass die Sitzsteuereinheit dazu vorgesehen ist, die Komforteinheit in einem Betriebszustand zumindest in Abhängigkeit von zumindest einer Sensorinformation der Erfassungseinheit anzusteuern, wodurch eine speziell an das Benutzerprofil angepasste, individuelle Komforteinstellung erreicht werden kann.

Des Weiteren wird vorgeschlagen, dass die Recheneinheit einen Komfortliniendatensatz umfasst, der zumindest einen Positionsdatensatz und/oder zumindest einen Verfahrdatensatz aufweist, wodurch eine Ansteuerung von zumindest einem Sitzaktuator der Komforteinheit an allgemeine Rahmenbedingungen und/oder an Standardverfahren vorteilhaft angepasst werden kann. Unter einem "Positionsdatensatz" soll in diesem Zusammenhang insbesondere ein Datensatz verstanden werden, der zumindest eine Information beinhaltet, die zumindest eine Endlage und/oder eine Grenzlage beschreibt, in welche ein Sitzbauteil, das von der Komforteinheit angetrieben ist, bewegt werden kann. Unter einem "Verfahrdatensatz" soll in diesem Zusammenhang insbesondere ein Datensatz verstanden werden, der zumindest eine Information beinhaltet, die eine räumliche Bewegungslinie beschreibt, entlang derer ein Sitzbauteil, das von der Komforteinheit angetrieben ist, bewegt werden kann.

Ist die Recheneinheit dazu vorgesehen, ausgehend vom Benutzerprofildatensatz und dem Komfortliniendatensatz in Abhängigkeit von zumindest einer Sensorinformation zumindest einen benutzerspezifischen Positionsdatensatz und/oder einen benutzerspezifischen Verfahrdatensatz zu errechnen, kann der Positionsdatensatz und/oder der Verfahrdatensatz an eine individuelle, für einen Passagier besonders angenehm empfundene Komforteinstellung angepasst werden.

Weist die Erfassungseinheit zumindest ein Sensorelement zur Erfassung von zumindest einer physikalischen Größe auf, können benutzerspezifische Körpermaße und/oder ein benutzerspezifisches Körpergewicht in einem Betriebszustand in Echtzeit zur Erzielung einer benutzerspezifischen Komforteinstellung angewendet werden.

In einer weiteren Ausgestaltung der Erfindung wird vorgeschlagen, dass das zumindest eine Sensorelement zur Erfassung von zumindest einem Sitzaktuatorzustand vorgesehen ist, wodurch relevante Sensorinformationen auf besonders einfache Weise bereitgestellt werden können. Unter einem "Sitzaktuatorzustand" soll in diesem Zusammenhang insbesondere ein Bewegungszustand und/oder ein Positionszustand eines Sitzaktuators verstanden werden. Unter einem "Sitzaktuator" soll in diesem Zusammenhang insbesondere ein elektrisch, pneumatisch und/oder hydraulisch betriebener Aktuator verstanden werden, der zu einer Verstellung von zumindest einer Sitzkomponente vorgesehen ist.

Ferner kann vorteilhaft Gewicht eingespart werden, wenn das zumindest eine Sensorelement an einer Sitzkomponente eines Sitzes angeordnet ist. Besonders vorteilhaft ist das zumindest eine Sensorelement in die Sitzkomponente integriert.

Die Recheneinheit kann Sensorinformationen zur Definition und/oder Anpassung des Benutzerprofildatensatzes bereits vor einem Benutzen eines Fluggastsitzes verarbeiten, wenn das zumindest eine Sensorelement dazu vorgesehen ist, eine Kabinenraummessung durchzuführen. Unter einer "Kabinenraummessung" soll in diesem Zusammenhang insbesondere eine Messung verstanden werden, die direkt in einem Kabinenraum stattfindet. Bevorzugt findet die Messung in einem Kabinengang oder in einem Kabinengangboden statt. Insbesondere kann das zumindest eine Sensorelement im Kabinengangboden oder in einer Kabinendecke angeordnet und dazu vorgesehen sein, eine Körpergröße und/oder ein Körpergewicht zu messen. Weiterhin vorteilhaft ist das zumindest eine Sensorelement dazu vorgesehen, spezielle Körperproportionen zu messen, wie insbesondere eine Oberschenkellänge, eine Unterschenkellänge und/oder eine Torsolänge.

Ein besonders hoher, individueller Sitzkomfort kann erreicht werden, wenn die Erfassungseinheit eine Eingabeeinheit umfasst, die dazu vorgesehen ist, den Benutzerprofildatensatz zumindest teilweise manuell zu definieren.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

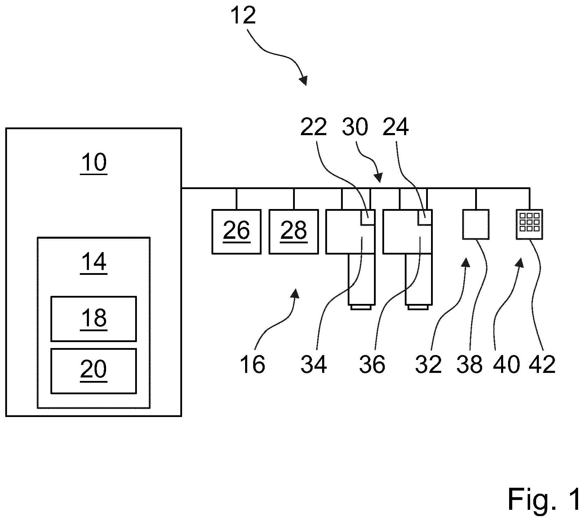

- Fig. 1: eine schematische Ansicht einer erfindungsgemäßen Sitzsteuerungsvorrichtung.

### Beschreibung des Ausführungsbeispiels

In Figur 1 ist schematisch ein Aufbau einer erfindungsgemäßen Sitzsteuerungsvorrichtung für einen Fluggastsitz (nicht dargestellt) gezeigt. Die Sitzsteuerungsvorrichtung umfasst eine Sitzsteuereinheit 10, die eine Komforteinheit 12 ansteuert. Die Komforteinheit 12 umfasst eine Sitzaktuatoreinheit 30 sowie eine Beleuchtungseinheit 32. Die Sitzaktuatoreinheit 30 beinhaltet zwei Sitzaktuatoren 34, 36 zur elektrischen Verstellung des Fluggastsitzes. Es ist in diesem Zusammenhang jedoch auch eine zumindest teilweise hydraulische Verstellung des Fluggastsitzes durch die Sitzaktuatoren 34, 36 denkbar. Die Sitzaktuatoren 34, 36 können zur Bewegung von unterschiedlichen, dem Fachmann als sinnvoll erscheinenden Sitzkomponenten, wie beispielsweise einer Beinauflage, einer Rückenlehne und/oder einer Kopfstütze, verwendet werden. Die Beleuchtungseinheit 32 umfasst ein Beleuchtungsmittel 38 zur Beleuchtung des Fluggastsitzes. Es ist in diesem Zusammenhang jedoch auch denkbar, dass die Beleuchtungseinheit 32 eine Vielzahl von Beleuchtungsmitteln und/oder eine Leselampe aufweist.

Die Sitzsteuerungsvorrichtung weist ferner eine Erfassungseinheit 16 auf, die zu einer Erfassung eines Körperprofils vorgesehen ist. Dazu weist die Erfassungseinheit 16 vier Sensorelemente 22, 24, 26, 28 auf. Die Sensorelemente 22, 24, 26, 28 erfassen unterschiedliche physikalische Größen und wandeln diese in elektrische Sensorinformationen um.

Das erste Sensorelement 22 misst eine elektrische Stromstärke des ersten Sitzaktuators 34. Das zweite Sensorelement 24 misst eine Verstellkraft des zweiten Sitzaktuators 36. Das dritte Sensorelement 26 misst einen Sitzbodendruck in einer von einem Sitzboden gebildeten Sitzkomponente (nicht dargestellt). Dabei ist das dritte Sensorelement 26 direkt an dem Sitzboden angeordnet. Das dritte Sensorelement 26 ist ferner in den Sitzboden integriert. Das vierte Sensorelement 28 führt eine Kabinenraummessung durch. Dabei ist das vierte Sensorelement 28 in einer Kabinendecke angeordnet.

Das vierte Sensorelement 28 misst eine Körpergröße in einem Kabinengang. Vor einer Benutzung eines Fluggastsitzes durch einen Passagier erfasst das vierte Sensorelement 28 eine Körpergröße des Passagiers, wenn dieser im Kabinengang aufrecht steht. Es ist in diesem Zusammenhang denkbar, dem Passagier die Messung der Körpergröße durch ein geeignetes Mittel, wie beispielsweise ein Beleuchtungsmittel, zu signalisieren. Hat der Passagier auf dem Fluggastsitz Platz genommen, erfasst das dritte Sensorelement 26 ein Körpergewicht des Passagiers durch eine Sitzbodendruckmessung im Sitzboden.

Bei einer manuellen Verstellung des Fluggastsitzes durch den Passagier erfasst das erste Sensorelement 22 eine elektrische Stromstärke des ersten Sitzaktuators 34 und das zweite Sensorelement 24 eine Verstellkraft des zweiten Sitzaktuators 36, die teilweise von Auflagekräften von Gliedmaßen des Passagiers abhängig sind. Das erste und zweite Sensorelement 22, 24 sind somit zur Erfassung von Sitzaktuatorzuständen vorgesehen. Es ist in diesem Zusammenhang selbstverständlich auch denkbar, andere Arten von Sensorelementen einzusetzen, die zu einer Erfassung eines Körperprofils dienen können. Ebenfalls ist es denkbar, eine andere, insbesondere eine größere Anzahl von Sensorelementen einzusetzen. Der Übersichtlichkeit halber ist das gezeigte Ausführungsbeispiel auf vier Sensorelemente 22, 24, 26, 28 begrenzt.

Die Sitzsteuereinheit 10 weist eine Recheneinheit 14 auf, die einen Benutzerprofildatensatz 18 umfasst. Der Benutzerprofildatensatz 18 ist durch die Erfassungseinheit 16 in einem Erfassungsmodus definiert. Dabei wertet die Recheneinheit 14 die von den Sensorelementen 22, 24, 26, 28 übermittelten Sensorinformationen aus. Aus einer Gesamtheit der Sensorinformationen erstellt die Recheneinheit 14 ein Benutzerprofil, welches im Benutzerprofildatensatz 18 gespeichert wird. Stellt die Recheneinheit 14 fest, dass ein zu den Sensorinformationen übereinstimmender Datensatz bereits vorhanden ist, wechselt die Recheneinheit 14 direkt in einen Betriebszustand und vermeidet ein Anlegen eines neuen Benutzerprofils. Zusätzlich werden bei einer individuellen Verstellung der Sitzaktuatoren 34, 36 manuelle Benutzereinstellungen in dem Benutzerprofildatensatz 18 hinterlegt.

Des Weiteren umfasst die Recheneinheit 14 einen Komfortliniendatensatz 20, der einen Positionsdatensatz und zumindest einen Verfahrdatensatz aufweist. Der Positionsdatensatz beinhaltet standardisierte Informationen, die Endlagen beschreiben, in welche ein Sitzbauteil (nicht dargestellt), das von der Komforteinheit 12 angetrieben ist, bewegt werden kann. Der Verfahrdatensatz beinhaltet standardisierte Informationen, die räumliche Bewegungslinien beschreiben, entlang derer das Sitzbauteil, das von der Komforteinheit 12 angetrieben ist, bewegt werden kann.

In einem Betriebsmodus der Sitzsteuerungsvorrichtung steuert die Sitzsteuereinheit 10 die Komforteinheit 12 in Abhängigkeit von zumindest einer Sensorinformation der Erfassungseinheit 16 an. Dabei verarbeitet die Recheneinheit 14 das zu den Sensorinformationen passende Benutzerprofil, das entweder bereits in dem Benutzerprofildatensatz 18 vorhanden war oder neu angelegt wurde. Ist das Benutzerprofil bereits bekannt, wendet die Recheneinheit 14 bereits gespeicherte manuelle Benutzereinstellungen an und kombiniert diese mit dem Komfortliniendatensatz 20. Als Ergebnis errechnet die Recheneinheit 14, ausgehend vom Benutzerprofildatensatz 18 und dem Komfortliniendatensatz 20 in Abhängigkeit von zumindest einer Sensorinformation einen benutzerspezifischen Positionsdatensatz und einen benutzerspezifischen Verfahrdatensatz.

Der benutzerspezifische Positionsdatensatz und der benutzerspezifische Verfahrdatensatz sind somit auf das Benutzerprofil abgestimmt. Basierend auf dem benutzerspezifischen Positionsdatensatz und dem benutzerspezifischen Verfahrdatensatz steuert die Recheneinheit 14 die Sitzaktuatoren 34, 36 mit angepassten Ansteuergeschwindigkeiten und angepassten Ansteuerwegen an. Während einer manuellen Anpassung beziehungsweise Nachverstellung einer Sitzkomponente, wie beispielsweise einer Rückenlehne oder einer Fußstütze, wechselt die Sitzsteuerungsvorrichtung in den Erfassungsmodus und speichert die manuellen Benutzereinstellungen in dem Benutzerprofildatensatz 18.

Zusätzlich umfasst die Erfassungseinheit 16 eine Eingabeeinheit 40, die dazu vorgesehen ist, den Benutzerprofildatensatz 18 zumindest teilweise manuell zu definieren. Die Eingabeeinheit 40 umfasst ein Mobiltelefon, insbesondere ein Smartphone. Über ein Eingabefeld 42 lässt sich ein persönlicher Benutzerprofildatensatz 18 erstellen. Dabei können insbesondere eine Körpergröße, ein Körpergewicht, eine Unterschenkellänge, eine Oberschenkellänge und/oder eine Torsolänge angegeben werden. In einer zusätzlichen Ausgestaltung umfasst die Eingabeeinheit 40 eine fest installierte Eingabevorrichtung, die ebenfalls ein Eingabefeld 42 aufweist und die erfassten Informationen auf einem Speichermedium, wie insbesondere einer Vielfliegerkarte und/oder einer Bordkarte, speichert. Die Eingabeeinheit 40 umfasst dabei ferner ein Kommunikationselement, um die Informationen des Speichermediums an die Recheneinheit 14 zur Definition eines Benutzerprofildatensatzes 18 zu übermitteln.

### Bezugszeichen

- 10: Sitzsteuereinheit
- 12: Komforteinheit
- 14: Recheneinheit
- 16: Erfassungseinheit
- 18: Benutzerprofildatensatz
- 20: Komfortliniendatensatz
- 22: Sensorelement
- 24: Sensorelement
- 26: Sensorelement
- 28: Sensorelement
- 30: Sitzaktuatoreinheit
- 32: Beleuchtungseinheit
- 34: Sitzaktuator
- 36: Sitzaktuator
- 38: Beleuchtungsmittel
- 40: Eingabeeinheit
- 42: Eingabefeld

## Patentansprüche

1. Sitzsteuerungsvorrichtung für einen Fluggastsitz, mit einer Sitzsteuereinheit (10), die zur Ansteuerung einer Komforteinheit (12) vorgesehen ist, wobei die Sitzsteuereinheit (10) eine Recheneinheit (14) aufweist, die zumindest einen durch eine Erfassungseinheit (16) definierten Benutzerprofildatensatz (18) umfasst, mit einer Erfassungseinheit (16), die dazu vorgesehen ist, den Benutzerprofildatensatz (18) zumindest in einem Erfassungsmodus zumindest teilweise zu definieren, wobei die Erfassungseinheit (16) zumindest ein Sensorelement (22, 24, 26, 28) zur Erfassung von zumindest einer physikalischen Größe aufweist, **dadurch gekennzeichnet, dass** das zumindest eine Sensorelement (28) dazu vorgesehen ist, eine Kabinenraummessung durchzuführen, wobei die Kabinenraummessung direkt in einem Kabinenraum stattfindet.

2. Sitzsteuerungsvorrichtung nach Anspruch 1, **dadurch gekennzeichnet, dass** die Sitzsteuereinheit (10) dazu vorgesehen ist, die Komforteinheit (12) in einem Betriebszustand zumindest in Abhängigkeit von zumindest einer Sensorinformation der Erfassungseinheit (16) anzusteuern.

3. Sitzsteuerungsvorrichtung nach Anspruch 1 oder 2, **dadurch gekennzeichnet, dass** die Recheneinheit (14) einen Komfortliniendatensatz (20) umfasst, der zumindest einen Positionsdatensatz und/oder zumindest einen Verfahrdatensatz aufweist.

4. Sitzsteuerungsvorrichtung nach Anspruch 3, **dadurch gekennzeichnet, dass** die Recheneinheit (14) dazu vorgesehen ist, ausgehend vom Benutzerprofildatensatz (18) und dem Komfortliniendatensatz (20) in Abhängigkeit von zumindest einer Sensorinformation zumindest einen benutzerspezifischen Positionsdatensatz und/oder einen benutzerspezifischen Verfahrdatensatz zu errechnen.

5. Sitzsteuerungsvorrichtung nach einem der vorhergehenden Ansprüche, **dadurch gekennzeichnet, dass** das zumindest eine Sensorelement (22, 24, 26) zur Erfassung von zumindest einem Sitzaktuatorzustand vorgesehen ist.

6. Sitzsteuerungsvorrichtung nach Anspruch 5, **dadurch gekennzeichnet, dass** das zumindest eine Sensorelement (22, 24, 26) an einer Sitzkomponente eines Sitzes angeordnet ist.

7. Sitzsteuerungsvorrichtung nach einem der vorhergehenden Ansprüche, **dadurch gekennzeichnet, dass** die Erfassungseinheit (16) eine Eingabeeinheit (40) umfasst, die dazu vorgesehen ist, den Benutzerprofildatensatz (18) zumindest teilweise manuell zu definieren.

8. Sitzsteuerungsvorrichtung nach einem der vorhergehenden Ansprüche, **dadurch gekennzeichnet, dass** das zumindest eine Sensorelement (28) zur Kabinenraummessung in einem Kabinengangboden oder in einer Kabinendecke angeordnet ist.

9. Sitzsteuerungsvorrichtung nach einem der vorhergehenden Ansprüche, **dadurch gekennzeichnet, dass** das zumindest eine Sensorelement (28) bei der Kabinenraummessung eine Körpergröße und/oder ein Körpergewicht misst.

10. Sitzsteuerungsvorrichtung nach einem der vorhergehenden Ansprüche, **dadurch gekennzeichnet, dass** das eine Sensorelement (/28) bei der Kabinenraummessung dazu vorgesehen ist, spezielle Körperproportionen zu messen, wie insbesondere eine Oberschenkellänge, eine Unterschenkellänge und/oder eine Torsolänge.

11. Fluggastsitz, mit einer Sitzsteuerungsvorrichtung nach einem der Ansprüche 1 bis 10.

## Claims

1. Seat control device for a flight passenger seat, with a control unit (10) that is configured for an actuation of a comfort unit (12), wherein the seat control unit (10) has a computing unit (14) comprising a user profile dataset (18), which is defined by a capturing unit (16), with a capturing unit (16) that is configured to at least partly define the user profile dataset (18) at least in a capturing mode, the capturing unit (16) comprising at least one sensor element (22, 24, 26, 28) for the purpose of capturing at least one physical quantity,
**characterised in that** the at least one sensor element (28) is configured to carry out a cabin space measurement, wherein the cabin space measurement takes place directly in a cabin space.

2. Seat control device according to claim 1, **characterised in that** the seat control unit (10) is configured, in an operating state, for an actuation of the comfort unit (12) at least as a function of at least one sensor information of the capturing unit (16).

3. Seat control device according to claim 1 or 2, **characterised in that** the computing unit (14) comprises a comfort data row (20) that includes at least one position dataset and/or at least one traversing dataset.

4. Seat control device according to claim 3, **characterised in that** the computing unit (14) is configured to calculate, on the basis of the user profile dataset (18) and the comfort data row (20), at least one user-specific position dataset and/or a user-specific traversing dataset, as a function of at least one sensor information.

5. Seat control device according to one of the preceding claims, **characterised in that** the at least one sensor element (22, 24, 26) is configured for a capture of at least one seat actuator state.

6. Seat control device according to claim 5, **characterised in that** the at least one sensor element (22, 24, 26) is arranged on a seat component of a seat.

7. Seat control device according to one of the preceding claims, **characterised in that** the capturing unit (16) comprises an input unit (40), which is configured to define the user profile dataset (18) at least partially in a manual fashion.

8. Seat control device according to one of the preceding claims, **characterised in that,** for a cabin space measurement, the at least one sensor element (28) is arranged in a cabin aisle floor or in a cabin ceiling.

9. Seat control device according to one of the preceding claims, **characterised in that,** in the cabin space measurement, the at least one sensor element (28) measures a body size and/or a body weight.

10. Seat control device according to one of the preceding claims, **characterised in that** the one sensor element (28) is configured, in the cabin space measurement, to measure specific body proportions, e.g. a thigh length, a shank length and/or a torso length.

11. Aircraft seat, with a seat control device according to one of claims 1 to 10.

## Revendications

1. Dispositif de commande de siège pour un siège de passager aérien,
avec une unité de commande de siège (10) prévue pour un actionnement d'une unité de confort (12), ladite unité de commande de siège (10) comprenant une unité de calcul (14) qui comporte au moins un ensemble de données de profile utilisateur (18) défini par une unité de captage (16),
avec une unité de captage (16) prévue, au moins dans un mode de captage, à au moins partiellement définir l'ensemble de données de profile utilisateur (18), ladite unité de captage (16) comprenant au moins un élément capteur (22, 24, 26, 28) pour un captage d'au moins une grandeur physique,
**caractérisé en ce que** l'au moins un élément capteur (28) est prévu à exécuter un mesurage d'espace de cabine, le mesurage d'espace de cabine ayant lieu directement dans un espace de cabine.

2. Dispositif de commande de siège selon la revendication 1, **caractérisé en ce que** l'unité de commande de siège (10) est prévue, en au moins un état opératif, à actionner l'unité de confort (12) au moins en dépendance à au moins une information capteur de l'unité de captage (16).

3. Dispositif de commande de siège selon l'une quelconque des revendications 1 ou 2, **caractérisé en ce que** l'unité de calcul (14) inclut un ensemble de données linéaire de confort (20) qui comporte au moins un ensemble de données positionnelles et/ou au moins un ensemble de données de déplacement.

4. Dispositif de commande de siège selon la revendication 3, **caractérisé en ce que** unité de calcul (14) est prévue à calculer, sur la base de l'ensemble de données de profile utilisateur (18) et de l'ensemble de données linéaire de confort (20), en dépendance à au moins une information capteur, au moins un ensemble de données positionnelles spécifique à l'utilisateur et/ou un ensemble de données translationnelles spécifique à l'utilisateur.

5. Dispositif de commande de siège selon l'une quelconque des revendications précédentes, **caractérisé en ce que** l'au moins un élément capteur (22, 24, 26) est prévu pour le captage d'au moins un état d'actionneur de siège.

6. Dispositif de commande de siège selon la revendication 5, **caractérisé en ce que** l'au moins un élément capteur (22, 24, 26) est disposé sur un composant siège d'un siège.

7. Dispositif de commande de siège selon l'une quelconque des revendications précédentes, **caractérisé en ce que** l'unité de captage (16) comporte une unité d'enregistrement (40), qui est prévue à définir l'ensemble de données de profile utilisateur (18) au moins partiellement en façon manuelle.

8. Dispositif de commande de siège selon l'une quelconque des revendications précédentes, **caractérisé en ce que,** pour le mesurage d'espace de cabine, l'au moins un élément capteur (28) est agencé dans un sol d'allée de cabine ou dans un plafond de cabine.

9. Dispositif de commande de siège selon l'une quelconque des revendications précédentes, **caractérisé en ce que,** dans le mesurage d'espace de cabine, l'au moins un élément capteur (28) mesure une taille corporelle et/ou un poids corporel.

10. Dispositif de commande de siège selon l'une quelconque des revendications précédentes, **caractérisé en ce que,** dans le mesurage d'espace de cabine, l'un élément capteur (28) est prévu à mesurer des proportions corporelles spéciales, comme une longueur de cuisse, une longueur de jambe et/ou une longueur de torse.

11. Siège de passager aérien, avec un dispositif de commande de siège selon l'une quelconque des revendications 1 à 10.
